# FASCICULE DE BREVET EUROPEEN

(11) **EP 1 873 042 B1**
(45) Date de publication et mention de la délivrance du brevet: **01.04.2009**
(21) Numéro de dépôt: 07300951.6
(22) Date de dépôt: 16.04.2007
(51) Int. Cl.: B62D 25/08, B60H 1/00

(54) **Sous-ensemble de véhicule comportant des moyens de canalisation d'air**
Fahrzeug-Unterbaugruppe mit Mitteln zur Luftkanalisation
Vehicle subassembly comprising air channelling means

(30) Priorité: 27.06.2006 FR 0652672
(43) Date de publication de la demande: 02.01.2008
(73) Titulaire: Renault SAS, 92100 Boulogne Billancourt (FR)
(72) Inventeur: Billard, Xavier, 78990, ELANCOURT (FR); Daniel, Yves, 92500, RUEIL MALMAISON (FR); Dumont, Sophie, 78280, GUYANCOURT (FR)

(56) Documents cités:
- DE-A1- 2 946 319
- DE-A1- 10 329 854
- DE-A1- 19 846 194
- FR-A- 2 093 109
- FR-A1- 2 569 455
- FR-A1- 2 777 862

## Description

La présente invention se rapporte à un sous ensemble de véhicule comportant des moyens de canalisation d'air.

Elle concerne en particulier un tel sous ensemble qui comporte un premier moyen de canalisation d'air avec une première embouchure et un deuxième moyen de canalisation d'air avec une deuxième embouchure, les moyens de canalisation étant raccordés par une pièce d'interface entre les embouchures, la pièce d'interface comportant un évidement central de passage d'air.

Un tel sous ensemble est décrit dans le document FR2093109 dans lequel la pièce d'interface est un manchon souple en caoutchouc, emmanché dans les canalisations d'air. Ce sous ensemble présente pour inconvénient que le manchon est difficile à monter par un opérateur en usine.

L'invention vise à améliorer un tel sous ensemble.

L'invention a pour objet un sous ensemble de véhicule comportant un premier moyen de canalisation d'air avec une première embouchure et un deuxième moyen de canalisation d'air avec une deuxième embouchure. Les moyens de canalisation sont raccordés par une pièce d'interface entre les embouchures, la pièce d'interface comportant un évidement central de passage d'air. La pièce d'interface comporte une plaque d'appui coopérant avec un joint compressible situé à la périphérie de la première embouchure. La plaque d'appui comporte une zone d'appui du joint et une zone évasée périphérique. La zone d'appui entoure l'évidement central. L'évasement de la zone évasé s'étend dans une direction opposée au joint.

Avantageusement, le zone évasée périphérique permet le glissement pour former une portion d'accostage lors de l'assemblage du sous ensemble.

Selon d'autres caractéristiques avantageuses de l'invention qui peuvent être prises séparément ou en combinaison :
- la zone d'appui et la zone évasée sont raccordées de façon affleurante, en ayant une surface glissante,
- la pièce d'interface est placée entre le premier moyen de canalisation et un rebord du deuxième moyen de canalisation délimitant la deuxième embouchure, le rebord ayant une paroi perpendiculaire au joint,
- la zone d'appui est plane et rigide,
- la zone évasée est aménagée sur une portion d'accostage de la périphérie de la pièce d'interface,
- la pièce d'interface et le deuxième moyen de canalisation comportent des moyens d'accrochage mutuels,
- la pièce d'interface comporte un fût qui comporte l'évidement central et qui est placé dans la deuxième embouchure,
- les moyens d'accrochage de la pièce d'interface sont aménagés sur le fût,
- la pièce d'interface est placée entre le premier moyen de canalisation et une traverse de structure de véhicule dans laquelle est aménagée la deuxième canalisation,
- le joint est placé sur un boîtier d'appareil de climatisation qui est le premier moyen de canalisation et dont une sortie d'air est la première embouchure.

L'invention a également pour objet un véhicule qui comporte un sous ensemble selon l'invention, le sous ensemble étant intégré à un système de climatisation de l'habitacle du véhicule.

L'invention a également pour objet un procédé d'assemblage d'un sous ensemble selon l'invention. Le procédé comporte une étape de liaison de la pièce d'interface avec le deuxième moyen de canalisation, en mettant en relation la deuxième embouchure et l'évidement central. Il comporte une première étape d'approche du premier moyen de canalisation et de la pièce d'interface selon une direction parallèle à un plan de la zone d'appui, le joint et la zone évasés passant en regard l'un de l'autre. Il comporte une deuxième étape d'approche jusqu'à ce que le joint soit en regard de la zone d'appui et la première embouchure en regard de l'évidement. Il comporte une étape d'appui du joint contre la zone d'appui.

D'autres caractéristiques et avantages de l'invention apparaîtront clairement à la lecture de la description suivante du mode de réalisation non limitatif de celle-ci, en liaison avec les dessins annexés sur lesquels :

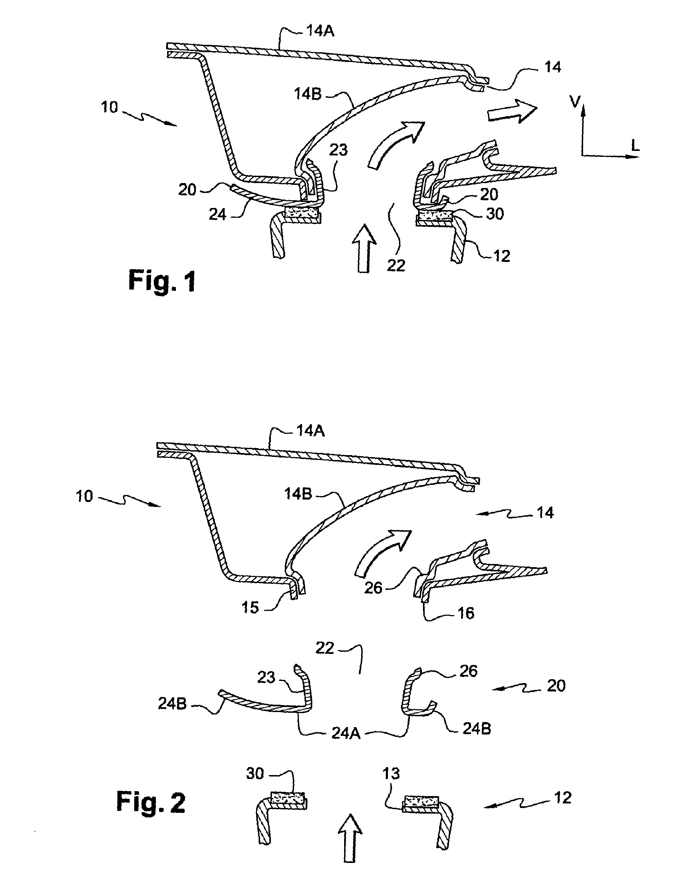

- la figure 1 est une section d'un sous ensemble selon l'invention après assemblage,
- la figure 2 est une section d'un sous ensemble selon l'invention en éclaté.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut.

Traditionnellement, un véhicule automobile est équipé d'un système de climatisation qui est destiné à fournir une circulation d'air dans l'habitacle, l'air étant réchauffé et/ou refroidi. Un tel système de climatisation comporte généralement un boîtier d'appareil de climatisation avec une pluralité de sorties pour la ventilation, le dégivrage... Les sorties sont généralement raccordées à des conduits de canalisation d'air en aval du boîtier de climatisation, l'air étant également canalisé dans le boîtier et en amont de ce dernier.

Dans l'exemple de réalisation de l'invention décrit ci-après, le sous ensemble 10 de véhicule comporte un premier moyen de canalisation d'air 12, ici le boîtier d'appareil de climatisation, avec une première embouchure 13, ici une sortie d'air de ventilation de l'habitacle.

Dans l'exemple de réalisation de l'invention décrit ci-après, le sous ensemble 10 comporte aussi un deuxième moyen de canalisation d'air 14, ici une traverse de structure de véhicule 14A intégrant un conduit interne 14B. Le deuxième moyen de canalisation d'air 14 est aussi muni d'une deuxième embouchure 16. La deuxième embouchure est ici délimitée par un rebord 15 d'un orifice inférieur de la traverse. Le rebord 15 comporte une paroi perpendiculaire au plan de l'embouchure 16. Le rebord 15 est saillant vers le bas par rapport à l'extrémité inférieure du conduit interne 14B.

Les moyens de canalisation sont raccordés entre eux par une pièce d'interface 20 interposée entre les embouchures. La pièce d'interface comporte un évidement central 22 de passage d'air dans un fût central 23 de passage d'air. La pièce d'interface comporte une plaque d'appui 24 qui est rigide et qui est raccordée perpendiculairement au fût.

La plaque d'appui 24 comporte une zone d'appui 24A et une zone évasée 24B périphérique de glissement. La zone d'appui 24A est plane. La zone d'appui et la zone évasée sont raccordées de façon affleurante. De plus, la pièce d'interface est formée dans un matériau rigide qui empêche le frottement ou favorise le glissement. De cette façon, la surface externe de la pièce d'interface, qui forme la zone d'appui et la zone évasée est glissante. La zone d'appui entoure l'évidement central délimité au raccordement du fût 23 avec la plaque 24. L'évasement de la zone évasée s'étend vers le haut sur les figures, c'est-à-dire vers les deuxièmes moyens de canalisation, à l'opposé des premiers moyens de canalisation. Dans une variante de réalisation, la zone évasée est déformable, sans que sa déformation soit préjudiciable au glissement.

La pièce d'interface 20 et le deuxième moyen de canalisation 14 comportent des moyens d'accrochage mutuels 26. Sur la pièce d'interface 20, les moyens d'accrochage sont aménagés sur le fût 23 et sont placés à l'extrémité supérieure du fût 22. Dans le conduit 14B, les moyens d'accrochage sont un épaulement. Le fût est placé dans la deuxième embouchure, en étant accroché sur l'épaulement dans le conduit 14B.

Le boîtier 12 comporte, vers le haut sur les figures, un joint compressible 30 situé à la périphérie de la première embouchure 13. Le joint est par exemple un joint en mousse qui ne doit pas être plié entre le boîtier 12 et la pièce d'interface 20, afin de préserver la qualité de l'étanchéité.

Il est à remarquer que l'évasement de la zone évasée 24B s'étend vers le haut dans une direction opposée au joint 30, le joint étant placé vers le bas par rapport à la pièce d'interface, sur les figures.

Le sous ensemble est assemblé sur un support d'un poste de travail d'atelier avant d'être installé dans le véhicule au sein d'un cockpit. Les diverses pièces du sous ensembles sont fournies sur le poste de travail, le boîtier 12 étant positionné complet sur le support. Le deuxième moyen est fourni complet sur le poste de travail. Ici, le conduit 14B est donc dans la traverse 14A.

Selon l'invention, le procédé d'assemblage du sous ensemble comporte une première étape de liaison de la pièce d'interface avec le deuxième moyen de canalisation, en mettant en relation la deuxième embouchure et l'évidement central. Dans cette étape, les moyens d'accrochage mutuels sont reliés entre eux.

Ensuite, il y a une première étape d'approche du premier moyen de canalisation et de la pièce d'interface. Dans cette étape, la traverse 14A équipé du conduit 14B et de la pièce d'interface 20 est approché du boîtier 12, à quelques millimètres ou quelques centimètres du joint 30 selon un mouvement qui est sensiblement selon une direction parallèle à un plan de la zone d'appui 24A. Le plan de la zone d'appui est alors parallèle au plan supérieur du joint 30, le joint et la zone évasée passant en regard l'un de l'autre. En cas d'erreur de manipulation, si la zone évasée entre en contact avec le joint, ce dernier n'est pas déformé et il y a glissement de la zone évasée sur le joint. L'évasement permet un positionnement sans que le joint ne forme un rouleau ou ne s'arrache du boîtier. Des fuites d'air au niveau du joint 30 sont ainsi évitées.

Ensuite, il y a une deuxième étape d'approche jusqu'à ce que le joint 30 soit en regard de la zone d'appui 24A et la première embouchure 13 en regard de l'évidement du fût 23. En cas d'erreur de manipulation, si la zone évasée 24B est entrée en contact avec glissement sur le joint 30, la zone d'appui 24A entre aussi en contact avec le joint 30 et glisse sur ce dernier. Ainsi, le joint n'est pas déformé en formant un rouleau et de fuites d'air sont évitées.

Ensuite, il y a une étape d'appui du joint contre la zone d'appui par un mouvement sensiblement perpendiculaire au plan de l'embouchure 13, du joint 30 et de la zone d'appui 24A. Le joint est ainsi aplati en coopérant avec la zone d'appui, cette déformation n'étant pas préjudiciable à la qualité de l'étanchéité.

Avantageusement, la zone évasée 24A est aménagée sur une portion d'accostage de la périphérie de la pièce d'interface, prévue pour le glissement lors des étapes d'approche. Par exemple, si le mouvement de la pièce intermédiaire est comme décrit ci-dessus de l'arrière vers l'avant, la zone évasée peut n'être présente que sur une portion d'accostage avant de la pièce d'interface.

Avantageusement, la pièce d'interface du sous ensemble selon l'invention permet un accostage fiable d'un moyen de canalisation d'air sur un joint porté par un autre moyen de canalisation. En effet, l'accostage est fiable même en présence d'un rebord agressif du rebord 15 par exemple formé dans une tôle découpée et emboutie.

## Revendications

1. Sous ensemble de véhicule comportant un premier moyen de canalisation d'air (12) avec une première embouchure (13) et un deuxième moyen de canalisation d'air (14) avec une deuxième embouchure (16), les moyens de canalisation étant raccordés par une pièce d'interface (20) entre les embouchures, la pièce d'interface comportant un évidement central (22) de passage d'air, **caractérisé en ce que** la pièce d'interface (20) comporte une plaque d'appui (24) coopérant avec un joint compressible (30) situé à la périphérie de la première embouchure (13), **en ce que** la plaque d'appui comporte une zone d'appui (24A) du joint et une zone évasée périphérique (24B), **en ce que** la zone d'appui (24A) entoure l'évidement central (22) et **en ce que** l'évasement de la zone évasé (24B) s'étend dans une direction opposée au joint (30).

2. Sous ensemble selon la revendication 1 , **caractérisé en ce que** la zone d'appui (24A) et la zone évasée (24B) sont raccordées de façon affleurante, en ayant une surface glissante.

3. Sous ensemble selon l'une quelconque des revendications précédentes, **caractérisé en ce que** la pièce d'interface (20) est placée entre le premier moyen de canalisation (12) et un rebord (15) du deuxième moyen de canalisation (14) délimitant la deuxième embouchure (16), le rebord ayant une paroi perpendiculaire au joint (30).

4. Sous ensemble selon la revendication précédente, **caractérisé en ce que** la zone d'appui (24A) est plane et rigide.

5. Sous ensemble selon l'une quelconque des revendications précédentes, **caractérisé en ce que** la zone évasée (24B) est aménagée sur une portion d'accostage de la périphérie de la pièce d'interface (20).

6. Sous ensemble selon l'une quelconque des revendications précédentes, **caractérisé en ce que** la pièce d'interface (20) et le deuxième moyen de canalisation (14) comportent des moyens d'accrochage mutuels (26), **en ce que** la pièce d'interface (20) comporte un fût (23) qui comporte l'évidement central (22) et qui est placé dans la deuxième embouchure (16) et **en ce que** les moyens d'accrochage (26) de la pièce d'interface (20) sont aménagés sur le fût (23).

7. Sous ensemble selon l'une quelconque des revendications précédentes, **caractérisé en ce que** la pièce d'interface (20) est placée entre le premier moyen de canalisation (12) et une traverse (14A, 15) de structure de véhicule dans laquelle est aménagée la deuxième canalisation (14, 14B).

8. Sous ensemble selon l'une quelconque des revendications précédentes, **caractérisé en ce que** le joint (30) est placé sur un boîtier d'appareil de climatisation qui est le premier moyen de canalisation (12) et dont une sortie d'air est la première embouchure (13).

9. Procédé d'assemblage d'un sous ensemble selon l'une quelconque des revendications précédentes, **caractérisé en ce qu'**il comporte une étape de liaison de la pièce d'interface (20) avec le deuxième moyen de canalisation (14), en mettant en relation la deuxième embouchure (16) et l'évidement central (22), **en ce qu'**il comporte une première étape d'approche du premier moyen de canalisation (12) et de la pièce d'interface (20) selon une direction parallèle à un plan de la zone d'appui (24A), le joint (30) et la zone évasés (24B) passant en regard l'un de l'autre, **en ce qu'**il comporte une deuxième étape d'approche jusqu'à ce que le joint (30) soit en regard de la zone d'appui (24A) et la première embouchure (13) en regard de l'évidement (22), et **en ce qu'**il comporte une étape d'appui du joint contre la zone d'appui.

10. Véhicule **caractérisé en ce qu'**il comporte un sous ensemble selon l'une quelconque des revendications 1 à 8, **caractérisé en ce que** le sous ensemble est intégré à un système de climatisation de l'habitacle du véhicule.

## Claims

1. Vehicle subassembly comprising a first air-channelling means (12) with a first mouthpiece (13) and a second air-channelling means (14) with a second mouthpiece (16), the channelling means being connected by an interface part (20) which forms an interface between the mouthpieces, the interface part having a central air-passage opening (22), **characterized in that** the interface part (20) has a support plate (24) cooperating with a compressible seal (30) situated at the periphery of the first mouthpiece (13), **in that** the support plate has a support region (24A) for the seal and a flared peripheral region (24B), **in that** the support region (24A) surrounds the central opening (22), and **in that** the flaring of the flared region (24B) extends in an opposite direction to the seal (30).

2. Subassembly according to Claim 1, **characterized in that** the support region (24A) and the flared region (24B) are connected in a flush manner so as to have a sliding surface.

3. Subassembly according to either one of the preceding claims, **characterized in that** the interface part (20) is placed between the first channelling means (12) and a lip (15) of the second channelling means (14) that defines the second mouthpiece (16), the lip having a wall perpendicular to the seal (30).

4. Subassembly according to the preceding claim, **characterized in that** the support region (24A) is flat and rigid.

5. Subassembly according to any one of the preceding claims, **characterized in that** the flared region (24B) is formed on a docking portion of the periphery of the interface part (20).

6. Subassembly according to any one of the preceding claims, **characterized in that** the interface part (20) and the second channelling means (14) comprise mutual fastening means (26), **in that** the interface part (20) has a stem (23) which contains the central opening (22) and which is placed in the second mouthpiece (16), and **in that** the fastening means (26) belonging to the interface part (20) are formed on the stem (23).

7. Subassembly according to any one of the preceding claims, **characterized in that** the interface part (20) is placed between the first channelling means (12) and a vehicle structural crossmember (14A, 15) in which the second channel (14, 14B) is formed.

8. Subassembly according to any one of the preceding claims, **characterized in that** the seal (30) is placed on an air-conditioning unit housing, which is the first channelling means (12) and an air outlet of which is the first mouthpiece (13).

9. Method of assembling a subassembly according to any one of the preceding claims, **characterized in that** it comprises a step of coupling the interface part (20) with the second channelling means (14) by engaging the second mouthpiece (16) and the central opening (22), **in that** it comprises a first approach step in which the first channelling means (12) and the interface part (20) are brought towards one another in a direction parallel to a plane of the support region (24A), the seal (30) and the flared region (24B) passing opposite one another, **in that** it comprises a second approach step until the seal (30) is opposite the support region (24A) and the first mouthpiece (13) is opposite the opening (22), and **in that** it comprises a step of pressing the seal against the support region.

10. Vehicle **characterized in that** it comprises a subassembly according to any one of claims 1 to 8, **characterized in that** the subassembly is integrated into a vehicle cabin air-conditioning system.

## Patentansprüche

1. Fahrzeug-Unterbaugruppe, die ein erstes Luftkanalisierungsmittel (12) mit einer ersten Mündungsöffnung (13) und ein zweites Luftkanalisierungsmittel (14) mit einer zweiten Mündungsöffnung (16) umfasst, wobei die Kanalisierungsmittel zwischen den Mündungsöffnungen über ein Schnittstellenteil (20) verbunden sind, das eine mittlere Luftdurchgangsaussparung (22) umfasst, **dadurch gekennzeichnet, dass** das Schnittstellenstück (20) eine Stützplatte (24) umfasst, die mit einer komprimierbaren Dichtung (30) am Umfang der ersten Mündungsöffnung (13) zusammenwirkt, dass die Stützplatte einen Stützbereich (24A) für die Dichtung und einen ausgeweiteten Umfangsbereich (24B) umfasst, dass der Stützbereich (24A) die mittlere Aussparung (22) umgibt und dass sich die Ausweitung des ausgeweiteten Bereichs (24B) in einer zur Dichtung (30) entgegengesetzten Richtung erstreckt.

2. Unterbaugruppe nach Anspruch 1, **dadurch gekennzeichnet, dass** der Stützbereich (24A) und der ausgeweitete Bereich (24B) bündig miteinander verbunden sind, indem sie eine Gleitfläche haben.

3. Unterbaugruppe nach einem der vorhergehenden Ansprüche, **dadurch gekennzeichnet, dass** das Schnittstellenteil (20) zwischen dem ersten Kanalisierungsmittel (12) und einem Rand (15) des zweiten Kanalisierungsmittels (14) platziert ist, der die zweite Mündungsöffnung (16) begrenzt und eine senkrecht zur Dichtung (30) verlaufende Wand hat.

4. Unterbaugruppe nach dem vorhergehenden Anspruch, **dadurch gekennzeichnet, dass** der Stützbereich (24A) eben und starr ist.

5. Unterbaugruppe nach einem der vorhergehenden Ansprüche, **dadurch gekennzeichnet, dass** der ausgeweitete Bereich (24B) an einem Andockabschnitt des Umfangs des Schnittstellenteils (20) vorgesehen ist.

6. Unterbaugruppe nach einem der vorhergehenden Ansprüche, **dadurch gekennzeichnet, dass** das Schnittstellenteil (20) und das zweite Kanalisierungsmittel (14) Mittel (26) zum gegenseitigen Befestigen umfassen, dass das Schnittstellenteil (20) einen Schaft (23) umfasst, der die mittlere Aussparung (22) umfasst und der in der zweiten Mündungsöffnung (16) platziert ist, und dass die Mittel (26) zum Befestigen des Schnittstellenteils (20) am Schaft (23) vorgesehen sind.

7. Unterbaugruppe nach einem der vorhergehenden Ansprüche, **dadurch gekennzeichnet, dass** das Schnittstellenteil (20) zwischen dem ersten Kanalisierungsmittel (12) und einem Fahrzeugstrukturquerträger (14A, 15) platziert ist, in dem die zweite Kanalisierung (14, 14B) vorgesehen ist.

8. Unterbaugruppe nach einem der vorhergehenden Ansprüche, **dadurch gekennzeichnet, dass** die Dichtung (30) an einem Klimaanlagengehäuse platziert ist, bei dem es sich um das erste Kanalisierungsmittel (12) handelt und bei dessen einem Luftausgang es sich um die erste Mündungsöffnung (13) handelt.

9. Verfahren zur Montage einer Unterbaugruppe nach einem der vorhergehenden Ansprüche, **dadurch gekennzeichnet, dass** es einen Schritt des Verbindens des Schnittstellenteils (20) mit dem zweiten Kanalisierungsmittel (14) umfasst, indem die zweite Mündungsöffnung (16) mit der mittleren Aussparung (22) in Eingriff gebracht wird, dass es einen ersten Schritt umfasst, bei dem das erste Kanalisierungsmittel (12) und das Schnittstellenteil (20) in einer parallel zu einer Ebene des Stützbereichs (24A) verlaufenden Richtung einander angenähert werden, wobei die Dichtung (30) und der ausgeweitete Bereich (24B) gegenüberliegend einander vorbeigehen, dass es einen zweiten Annäherungsschritt umfasst, bis die Dichtung (30) dem Stützbereich (24A) und die erste Mündungsöffnung (13) der Aussparung (22) gegenüberliegt, und dass es einen Schritt des Andrückens der Dichtung an den Stützbereich umfasst.

10. Fahrzeug, **dadurch gekennzeichnet, dass** es eine Unterbaugruppe nach einem der Ansprüche 1 bis 8 umfasst, **dadurch gekennzeichnet, dass** die Unterbaugruppe in einer Klimaanlage der Fahrgastzelle des Fahrzeugs integriert ist.
